# EUROPÄISCHE PATENTSCHRIFT

(11) **EP 1 422 519 B1**
(45) Veröffentlichungstag und Bekanntmachung des Hinweises auf die Patenterteilung: **23.02.2011**
(21) Anmeldenummer: 03026781.9
(22) Anmeldetag: 21.11.2003
(51) Int. Cl.: G01N 27/414

(54) **Sensor zum Messen einer Gaskonzentration oder Ionenkonzentration**
Sensor for measuring a gas concentration or ion concentration
Capteur pour mesurer une concentration gazeuse ou une concentration ionique

(30) Priorität: 22.11.2002 DE 10254523
(43) Veröffentlichungstag der Anmeldung: 26.05.2004
(73) Patentinhaber: Micronas GmbH, 79108 Freiburg i. Br. (DE)
(72) Erfinder: Frerichs, Heinz-Peter, 79271 St. Peter (DE)
(74) Vertreter: Koch Müller Patentanwaltsgesellschaft mbH

(56) Entgegenhaltungen:
- EP-A- 0 155 726
- DE-A- 4 333 875
- DE-A- 10 118 367
- US-A- 4 764 797

## Beschreibung

Die Erfindung bezieht sich auf einen Sensor zum Messen einer Gaskonzentration oder Ionenkonzentration gemäß dem Oberbegriff von Anspruch 1.

Ein solcher Sensor ist aus DE 101 18 367 A1, die auf die Anmelderin zurückgeht, bekannt.

Zur Messung von Gaskonzentrationen sind z.B. aus der US 4,411,741 Sensoren mit Feldeffekttransistoren bekannt, die eine als Gate verwendete gassensitive Schicht aufweisen, deren Austrittsarbeit abhängig ist von einer umgebenden Gaskonzentration.

Weiterhin werden zur Messung von Ionenkonzentrationen unter anderem Sensoren mit Feldeffekttransistoren verwendet, die eine als Gate verwendete ionensensitive Schicht aufweisen, deren Potential abhängig ist von der Ionenkonzentration einer umgebenden Flüssigkeit oder eines umgebenden Gases. Die US 5,911,873 zeigt einen derartigen ionensensitiven FET (ISFET).

Derartige Sensoren werden im allgemeinen erzeugt, indem in einem Halbleitersubstrat durch Gegendotierung jeweils eine Drain und eine Source erzeugt werden und eine isolierende Schicht auf dem Substrat zwischen der Source und der Drain gewachsen oder deponiert wird. Eine ionensensitive Schicht kann direkt auf diese isolierende Schicht aufgebracht werden. Eine gassensitive Schicht kann in einem bestimmten Abstand angebracht werden, was als suspended Gate FET (SGFET) bezeichnet wird. Alternativ hierzu kann ein Gate auf dem Isolator aufgebracht werden, das kapazitiv durch ein in einem bestimmten Abstand angebrachtes gassensitives Gate gesteuert wird. Ein derartiger als capacitive controlled FET (CCFET) bezeichneter Sensor ist z.B. in der DE 43 33 875 C2 beschrieben.

Ein Nachteil dieser Anordnungen ist, dass wegen einer immer vorhandenen Oberflächenleitfähigkeit das Potential über dem FET nach einer gewissen Zeit auf das Potential, welches an dem gassensitiven Gate anliegt, gezogen wird, was zu einer Drift des Drain-Source Stromes führt. Um dies zu verhindern wird herkömmlicherweise um den FET ein leitfähiger Ring gelegt, der auch Guardring genannt wird und auf ein definiertes Potential gelegt werden kann. Bei einer derartigen Anordnung nimmt der Kanalbereich des FET aufgrund der Oberflächenleitfähigkeit des Bereiches zwischen Guardring und Kanalbereich nach einer gewissen Zeit das Potential des Guardringes an. Der Abstand des Guardringes von dem Kanalbereich des FET und die Leitfähigkeit der Oberfläche definieren die Zeit, bis der Kanalbereich das Guardring-Potential annimmt, wodurch die minimal mögliche Konzentrationsänderung pro Zeit festgelegt wird, die ein zu detektierendes Gassignal haben darf, um registriert zu werden. Dieser Abstand bestimmt die Größe und damit auch die Herstellungskosten eines derartigen Sensors.

Der Erfindung liegt die Aufgabe zugrunde, einen weiteren Sensor zu schaffen, der kostengünstig und mit kleinem Bauraum herstellbar ist und dennoch eine hohe Messgenauigkeit für die zeitliche Konzentrationsänderung gewährleistet. Insbesondere soll der Oberflächenwiderstand zwischen Guardring und FET vergrößert und damit der minimale Konzentrationsanstieg pro Zeit eines zu detektierenden Gassignales erhöht werden.

Diese Aufgabe wird durch einen Sensor nach Anspruch 1 gelöst.

Die Unteransprüche beschreiben bevorzugte Weiterbildungen.

Erfindungsgemäß wird somit auf überraschend einfache Weise die Oberflächenleitfähigkeit zwischen Guardring und FET vergrößert, ohne dass hierzu eine größer dimensionierte Schaltung notwendig ist. Der Erfindung sieht vor, um den FET herum einen oder mehrere Ringe anzuordnen, die durch ein anderes Oberflächenmaterial definiert sind als das restliche Oberflächenmaterial und dadurch andere Oberflächenleitfähigkeiten haben und Kontaktwiderstände ausbilden können. Zusätzlich kann noch eine Oberflächenprofilierung gemäß DE 101 18 367 A1 vorgesehen werden, um weiter die RC-Zeit, die ein Angleichen des FET-Potentials an das Potential des Guardrings definiert, zu vergrößern, ohne dass die Funktionsfähigkeit der Sensoranordnung durch diese Oberflächenprofilierung beeinträchtigt wird. Durch eine solche Oberflächenprofilierung wird die RC-Zeit zusätzlich noch verlängert. Bei Verwendung der Oberflächenprofilierung sollten die erhabenen Bereiche eine andere, vorzugsweise geringere Oberflächenleitfähigkeit aufweisen als die zurückgesetzten Bereiche.

Die Oberflächenprofilierung kann hierbei erfindungsgemäß auf einfache Weise ausgebildet werden, indem auf eine zuvor erzeugte Dickoxidschicht zusätzlich zueinander beabstandete Erhöhungen ausgebildet werden.

Die ringförmig auf der Dickoxidschicht angeordneten Strukturen, die durch ein anderes Oberflächenmaterial definiert sind als das restliche Oberflächenmaterial, haben erfindungsgemäß andere Oberflächenleitfähigkeiten und bilden deshalb andere, vorzugsweise höhere Kontaktwiderstände aus. Insgesamt wird durch die Erfindung der Oberflächenwiderstand zwischen Guardring und FET vergrößert und damit der minimale Konzentrationsanstieg/Zeit eines Gassignals erhöht.

Die Ausbildung auch größerer Erhöhungen ist dabei in dem Luftspalt zwischen der sensitiven Gateschicht und der Dünnoxidschicht über dem Kanalbereich in der Regel unproblematisch.

Die Erfindung wird im folgenden anhand der beiliegenden Zeichnungen an einigen Ausführungsformen näher erläutert. Es zeigen:
Fig. 1 eine Draufsicht auf einen Sensor gemäß einer Ausführungsform der Erfindung;
Fig. 2 einen Schnitt entlang der Linie A-A' von Figur 1;
Fig. 3 einen ähnlichen Schnitt wie in Fig. 2, jedoch durch einen anderen Sensor;

Ein Gassensor weist auf einem Substrat 11 eines ersten Ladungsträgertyps, z.B. aus n-dotiertem Silizium, eine Source 2 und eine Drain 3 eines zweiten Ladungsträgertyps, z.B. aus p-dotiertem Silizium auf, die z.B. durch Ionenimplantation ausgebildet sind.

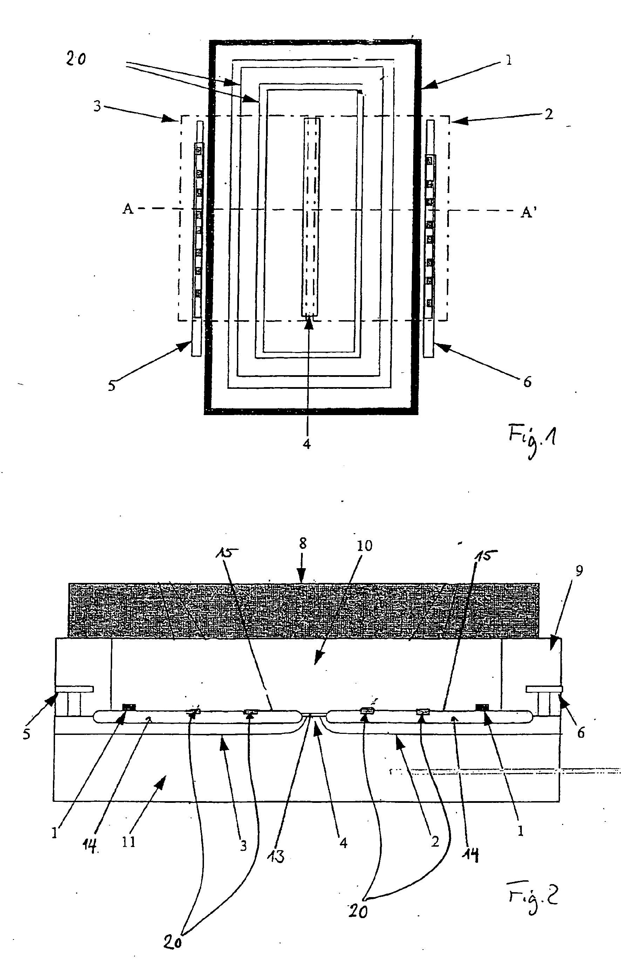

Die Source 2 ist mit einem Sourceanschluss 6, die Drain 3 mit einem Drainanschluss 5 versehen. Zwischen Source 2 und Drain 3 ist in dem Substrat ein Kanalbereich 4 vorgesehen, auf dem eine Dünnoxidschicht 13 ausgebildet ist. Auf der Source 2 und der Drain 3 sind Isolatorschichten, z.B. Dickoxidschichten 14 ausgebildet, auf deren Oberfläche 15 ein Guardring 1 aus einem leitfähigen Material aufgebracht ist, der gemäß der Draufsicht von Figur 1 um den Kanalbereich 4 herum verläuft und auf ein definiertes Potential gelegt werden kann.

Auf seitlichen Isolatorbereichen 9 ist eine gasssensitive Gateschicht 8 angeordnet, deren Potential von einer umgebenden Gaskonzentration abhängig ist. Zwischen der Gateschicht 8 und der Dünnoxidschicht 13 ist ein Luftspalt 10 ausgebildet. Die Dünnoxidschicht 13 wirkt zusammen mit dem Luftspalt als Gatedielektrikum. Änderungen der Gaskonzentration können somit als Änderungen des Source-Drain-Stromes nachgewiesen werden.

Zwischen der Dünnoxidschicht 13 oberhalb des Kanalbereiches 4 und dem Guardring 1 ist eine besondere Oberflächenstruktur vorgesehen, durch welche der Oberflächenwiderstand zwischen Guardring 1 und FET vergrößert wird. Durch geeignete Depositionsschritte von Schichten und durch Photomasken sowie anschließendes Ätzen werden definierte Materialien in Form von einem oder mehreren Ringstrukturen auf der Dickoxidschicht 14 angeordnet oder in dieser eingebettet. In Fig. 1 und 2 sind diese Ringstrukturen mit dem Bezugszeichen 20 bezeichnet. Die Ringstrukturen können als Kreisringe ausgebildet sein oder - wie in Fig. 1 gezeigt - viereckig oder auch vieleckig verlaufen. Als Material für die Ringstrukturen bietet sich Aluminium oder Aluminium mit Kupferanteil an, wodurch die Ringstrukturen 20 beim Aussetzen an die Umgebungsluft an ihrer Oberfläche ein Aluminiumoxid bilden. Dies bewirkt, dass der Widerstand an der Oberfläche zwischen Guardring 1 und Kanal 4 erhöht wird und damit die RC-Zeit vergrößert ist, die ein Angleichen des FET-Potentials an das Guardringpotential definiert.

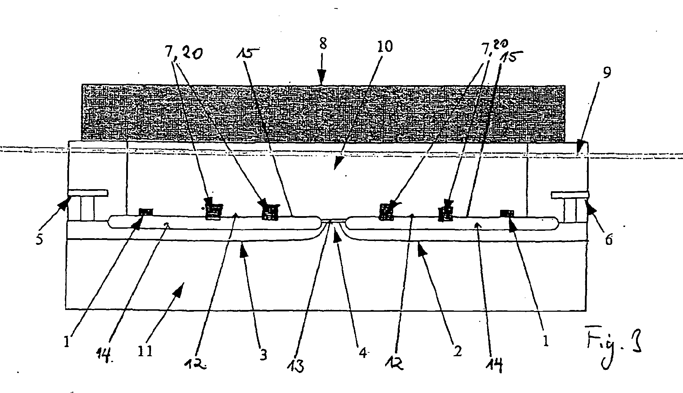

In Fig. 3 ist ein ähnlicher Sensor wie in Fig. 2 gezeigt. Dort erheben sich jedoch die Ringstrukturen 20 von der übrigen Oberfläche der Dickoxidschicht 14 in Richtung Luftspalt 10. Die zwischen dieser Erhöhung, also erhabenen Ringstrukturen 20, liegenden Bereiche sind als Vertiefungen 12 bezeichnet. Die erhabenen Ringstrukturen 20 weisen eine geringere Oberflächenleitfähigkeit als die Vertiefungen 12 auf. Die Ausbildung von Erhöhungen 7 und Vertiefungen 12 führt zu einer Oberflächenprofilierung der Dickoxidschicht 14. Die Profilierung der Oberfläche 15 kann insbesondere ausgebildet werden, indem durch entsprechende Depositionsschritte auf der Dickoxidschicht 14 Schichten aufgetragen werden und anschließend in mit Photomasken definierten Ätzschritten die Vertiefungen freigelegt werden. Die durch Deposition aufgebrachten Erhöhungen 7 bestehen aus einem anderen Material als die Dickoxidschicht 14. Dabei wird für die Oberflächenprofilierung als Material mit einer geringen Oberflächenleitfähigkeit Aluminium oder Aluminium mit Kupferanteil verwendet. Dieses bildet bei Kontakt mit Luft an der Oberfläche ein Aluminiumoxid, wodurch die Oberflächenleitfähigkeit deutlich herabgesetzt wird. Dort wo die Schichten geätzt wurden, liegt die Dickoxidschicht 14 frei, also in den Vertiefungen 12.

Ergänzend wird darauf verwiesen, dass die Dünnoxidschicht 13 auch als Kapazität realisiert sein kann.

### Bezugszeichenliste

- 1.: Guardring
- 2.: Source
- 3.: Drain
- 4.: Kanalbereich
- 5.: Drainanschluss
- 6.: Sourceanschluss
- 7.: Erhöhungen
- 8.: Gassensitives Gate
- 9.: Isolationsschicht
- 10.: Luftspalt
- 11.: Substrat
- 12.: Vertiefungen
- 13.: Dünnoxidschicht
- 14.: Dickoxidschicht
- 15.: Oberfläche
- 16.: Elektrode
- 20.: Bereiche/Ringe mit erhöhtem Oberflächenwiderstand

## Patentansprüche

1. Sensor zum Messen einer Gaskonzentration oder Ionenkonzentration, der aufweist:
ein Substrat (11) eines ersten Ladungsträgertyps,
eine auf dem Substrat ausgebildete Drain (3) eines zweiten Ladungsträgertyps,
eine auf dem Substrat ausgebildete Source (2) des zweiten Ladungsträgertyps,
einen Kanalbereich (4) des Substrats, der zwischen Drain (3) und Source (2) angeordnet ist,
einen leitfähigen Guardring (1), der außerhalb des Kanalbereichs (4) angeordnet ist,
eine sensitive Gateschicht (8), deren Potential von einer umgebenden Gaskonzentration oder Ionenkonzentration abhängig ist, wobei zwischen der Gateschicht (8) und dem Kanalbereich (4) ein Luftspalt (10) vorgesehen ist,
eine Oxidschicht (14), die zwischen dem Guardring (1) und dem Kanalbereich (4) ausgebildet ist,
einen oder mehrere Ringe (20), welche auf der Oxidschicht (14) angeordnet oder in diese eingebettet sind, **dadurch gekennzeichnet, dass** der oder die Ringe (20) aus einem anderen Material als die Oxidschicht (14) bestehen und dieses Material eine geringere Oberflächenleitfähigkeit als die Oxidschicht (14) aufweist, und
der oder die Ringe (20) aus Aluminium oder aus Aluminium mit Kupferanteil bestehen, welche ein Aluminiumoxid ausbilden.

2. Sensor nach Anspruch 1, **dadurch gekennzeichnet, dass** auf einer Oberfläche (15) zwischen einer isolierenden Dünnschicht (13) auf dem Kanalbereich und dem Guardring (1) durch Deposition der oder die Ringe (20) aufgetragen sind.

3. Sensor nach Anspruch 1 oder 2, **dadurch gekennzeichnet, dass** der oder die Ringe (20) konzentrisch zwischen dem Kanalbereich (4) und dem Guardring (1) ausgebildet sind.

4. Sensor nach einem der vorherigen Ansprüche, **dadurch gekennzeichnet, dass** die sensitive Gateschicht (8) eine gassensitive Gateschicht ist.

## Claims

1. Sensor for measuring a gas concentration or ion concentration, which comprises:
a substrate (11) of a first charge carrier type,
a drain (3), which is formed on the substrate, of a second charge carrier type,
a source (2), which is formed on the substrate, of the second charge carrier type,
a channel region (4) of the substrate, which is arranged between drain (3) and source (2),
a conductive guard ring (1) which is arranged outside the channel region (4),
a sensitive gate layer (8), the potential of which is dependent on an ambient gas concentration or ion concentration, wherein an air gap (10) is provided between the gate layer (8) and the channel region (4),
an oxide layer (14) which is formed between the guard ring (1) and the channel region (4), and
one or more rings (20) which are arranged on the oxide layer (14) or embedded therein,
**characterised in that** the ring or rings (20) consists or consist of a material different from the oxide layer (14) and this material has a smaller surface conductivity than the oxide layer (14) and the ring or the rings (20) consists or consist of aluminium or of aluminium with a copper component, which form an aluminium oxide.

2. Sensor according to claim 1, **characterised in that** the ring or rings (20) is or are applied to a surface (15) between an insulating thin layer (13) on the channel region and the guard ring (1) by deposition.

3. Sensor according to claim 1 or 2, **characterised in that** the ring or the rings (20) is or are formed concentrically between the channel region (4) and the guard ring (1).

4. Sensor according to any one of the preceding claims, **characterised in that** the sensitive gate layer (8) is a gas-sensitive gate layer.

## Revendications

1. Capteur pour la mesure d'une concentration en gaz ou en ions présentant :
. un substrat (11) d'un premier type de support de charges
. un drain (3) présent sur le substrat d'un deuxième type de support de charges
. une source (2) présente sur le substrat du deuxième type de charges
. une zone de canal (4) du substrat qui est agencée entre le drain (3) et la source (2)
. un anneau conducteur de garde (1) qui est prévu à l'extérieur de la zone de canal (4)
. une couche sensible de porte (8) dont le potentiel dépend de la concentration environnante en gaz ou en ions dans lequel entre la couche de porte (8) et la zone de canal (4) se trouve une fente d'air (10)
. une zone d'oxyde (14) entre l'anneau de garde (1) et la zone de canal (4)
. un ou plusieurs anneau(x) (20) qui sont prévus sur, ou enfouis dans, la couche d'oxyde (14) **caractérisé en ce que** l'anneau ou les anneaux (20) se composent d'un autre matériau que la couche d'oxyde (14) et **en ce que** ce matériau présente une conduction de surface plus faible que celle de la couche d'oxyde (14) et **en ce que** l'anneau ou les anneaux (20) sont en aluminium ou en aluminium avec des parties de cuivre lequel présente un oxyde d'aluminium.

2. Capteur selon la revendication 1 **caractérisé en ce que** l'anneau ou les anneaux (20) est ou sont rapporté(s) par déposition sur une surface (15) se trouvant entre une couche mince isolante (13) sur la zone de canal (4) et l'anneau de garde (1).

3. Capteur selon la revendication 1 ou 2 **caractérisé en ce que** l'anneau ou les anneaux est ou sont concentriques entre la zone de canal (4) et l'anneau de garde (1).

4. Capteur selon l'une des revendications précédentes **caractérisé en ce que** la zone sensible de porte (8) est une couche de porte sensible au gaz.
